(19) Europäisches Patentamt
European Patent Office
Office européen des brevets

(11) **EP 2 444 936 A2**

(12) **EUROPEAN PATENT APPLICATION**

(43) Date of publication:
**25.04.2012 Bulletin 2012/17**

(51) Int Cl.:
**G06T 7/00** (2006.01)

(21) Application number: **11185725.6**

(22) Date of filing: **19.10.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **21.10.2010 KR 20100102927**

(71) Applicant: **Samsung Electronics Co., Ltd.**
**Suwon-si, Gyeonggi-do 443-742 (KR)**

(72) Inventors:
• **Kim, Ji Won**
**135-506 Seoul (KR)**

• **Park, Du Sik**
**443-737 Gyeonggi-do (KR)**
• **Lee, Ho Young**
**443-768 Gyeonggi-do (KR)**
• **Baik, Aron**
**137-072 Seoul (KR)**

(74) Representative: **D'Halleweyn, Nele Veerle Trees Gertrudis et al**
**Arnold & Siedsma**
**Sweelinckplein 1**
**2517 GK The Hague (NL)**

(54) **Disparity estimation system, apparatus, and method for estimating consistent disparity from multi-viewpoint video**

(57)  A disparity estimation system, apparatus, and method of estimating a consistent depth from a multi-view video. When estimating a disparity at a plurality of viewpoints, the disparity estimation system may estimate a temporally consistent disparity considering a temporal smoothness between proximate frames.

**FIG. 6**

```
        ┌─────────┐
        │  START  │
        └────┬────┘
             │
             ▼
┌─────────────────────────────────────┐
│ ACQUIRE N IMAGES OF PREVIOUS FRAME,  │
│ DISPARIT MAPS WITH RESPECT TO EACH OF│  610
│ N IMAGES, AND N IMAGES OF CURRENT    │
│ FRAME                                │
└──────────────────┬───────────────────┘
                   │
                   ▼
┌─────────────────────────────────────┐
│        SET ENERGY FUNCTION          │  620
└──────────────────┬───────────────────┘
                   │
                   ▼
┌─────────────────────────────────────┐
│ ESTIMATE DISPARITY THROUGH PROCESS OF│
│ OPTIMIZING ENERGY WITH RESPECT TO    │  630
│ DISPARITY ASSIGNMENT USING ENERGY    │
│ FUNCTION                             │
└──────────────────┬───────────────────┘
                   │
                   ▼
              ┌─────────┐
              │   END   │
              └─────────┘
```

EP 2 444 936 A2

**Description**

The invention relates to a disparity estimation system, to a disparity estimation method, and to a computer program for performing such a method.

Example embodiments of the following description relate to an apparatus and method of generating a video signal for minimizing crosstalk between a luminance signal and a chrominance signal.

In general, to display a three-dimensional (3D) image, several viewpoints of two-dimensional (2D) images are used. For a multi-view display or a free-viewpoint television (TV), a super multi-viewpoint image may be used. However, an apparatus for acquiring a number of viewpoints of an image may be expensive, and thus, it may take a relatively long time for the apparatus to reach the general public.

An image of all viewpoints may not be acquired to generate a multi-viewpoint image. For example, after acquiring a predetermined number of images using a camera, images with respect to other viewpoints may be synthesized using an interpolation or an extrapolation process and through analyzing previously acquired images.

3D information, indicating a scene structure, may be used for synthesizing viewpoint images. In general, a 3D scene structure may be expressed using a depth based on a reference viewpoint. For example, a disparity corresponding to a difference due to viewpoints may occur on each viewpoint image. The 3D scene structure may be expressed using the disparity between the reference viewpoint and a corresponding viewpoint. In this instance, the disparity and the depth may be used interchangeably. In a computer vision process, the depth may be found using a stereo matching process when a plurality of images is provided.

Accordingly, a system and a method for more effectively providing a multi-view image are desired.

The foregoing and/or other aspects are achieved by providing a disparity estimation system, including a disparity estimation unit to estimate a disparity through a process of optimizing an energy with respect to a disparity assignment using an energy function including a temporal smoothness term. Here, the temporal smoothness term constrains a difference in the disparity with respect to pixels present at the same location at the same point in time between proximate frames with respect to inputted images.

The temporal smoothness term may be calculated with respect to the pixels based on a sum of values where each of the values is a minimum value between an absolute value of the difference and a predetermined constant value.

The energy function may include the temporal smoothness term with respect to a region where a motion of an object does not occur in the inputted image.

The region where the motion of the object does not occur in the inputted image may include a region where a color difference between the proximate frames is less than a predetermined threshold value.

Each term included in the energy function may be calculated with respect to the disparity assignment using a Markov random field.

The process of optimizing the energy may include a process of optimizing the energy with respect to the disparity assignment using a graph cut.

The graph cut may be performed using a graph where an edge is connected between pixels placed at the same position among pixels of a graph with respect to a previous frame and pixels of a graph with respect to a current frame.

The graph cut may be performed by introducing a constraint with respect to a temporal smoothness to an edge connected to a source or a sink on a graph.

The energy function may further include a spatial smoothness term constraining the difference in the disparity with respect to neighboring pixels, and a data term constraining a color difference between viewpoints.

With respect to a first frame, the disparity estimation unit may estimate a disparity through a process of optimizing an energy with respect to the disparity assignment using an energy function including the data term and the spatial smoothness term. Further, with respect to a second frame and the subsequent frame, the disparity estimation unit may fix the disparity of the previous frame and may estimate a disparity through a process of optimizing an energy with respect to the disparity assignment using an energy function including the data term, the spatial smoothness term, and the temporal smoothness term.

The foregoing and/or other aspects are achieved by providing a disparity estimation method, including estimating a disparity through a process of optimizing an energy with respect to a disparity assignment using an energy function including a temporal smoothness term. In this instance, the temporal smoothness term constrains a difference in the disparity with respect to pixels present at the same location at the same point in time between proximate frames with respect to inputted images.

By estimating a spatially and temporally consistent disparity, the flickering effect of a screen may be reduced.

Since, in response to an input of a new frame, a disparity map may be generated using only a previous frame during the rendering process, a disparity may be immediately calculated to render the new frame.

According to an aspect of the invention, the temporal smoothness term may be calculated with respect to the pixels based on a sum of values where each of the values is a minimum value between an absolute value of the difference and a predetermined constant value.

According to another aspect of the invention, the energy function may include the temporal smoothness term with respect to a region where a motion of an object does not occur in the inputted image.

According to another aspect of the invention, the region where the motion of the object does not occur in the inputted image may include a region where a color difference between the proximate frames is less than a predetermined value.

According to another aspect of the invention, each term included in the energy function may be calculated with respect to the disparity assignment using a Markov random field.

According to another aspect of the invention, the process of optimizing the energy may comprise a process of optimizing the energy with respect to the disparity assignment using a graph cut.

According to another aspect of the invention, the graph cut may be performed using a graph where an edge is connected between pixels placed at the same position among pixels of a graph with respect to a previous frame and pixels of a graph with respect to a current frame.

According to another aspect of the invention, the graph cut may performed by adding a constraint with respect to a temporal smoothness to an edge connected to a source or a sink on a graph.

According to another aspect of the invention, the energy function may further include a spatial smoothness term constraining the difference in the disparity with respect to neighboring pixels, and a data term constraining a color difference between viewpoints.

According to another aspect of the invention, the method may further comprise

estimating a disparity, with respect to a first frame, through a process of optimizing an energy involving the disparity assignment using an energy function including the data term and the spatial smoothness term, and

fixing the disparity, with respect to a second frame and a subsequent frame, of the previous frame and estimates a disparity through a process of optimizing an energy with respect to the disparity assignment using an energy function including the data term, the spatial smoothness term, and the temporal smoothness term.

The foregoing and/or other aspects are achieved by providing a disparity estimation apparatus, including an image acquisition unit to acquire a plurality of image of a previous frame, disparity maps with respect to each of the plural images, and a plurality of images of a current frame; an energy function setting unit to set an energy function; and a disparity estimation unit to estimate a disparity through a process of optimizing energy with respect to a disparity assignment using the energy function set by the energy function setting unit.

According to an aspect of the invention, the energy function setting unit may classifie an energy function into a region including a motion of an object and a region excluding the motion of the object, wherein the region excluding the motion of the object may include a region where a color difference between proximate frames is less than a predetermined threshold value.

According to another aspect of the invention, the energy function setting unit may set an energy function differently for a first frame and a subsequent fame.

According to another aspect of the invention, the disparity estimation unit may usess a graph cut to optimize the energy with respect to the disparity assignment.

Additional aspects of embodiments will be set forth in part in the description which follows and, in part, will be apparent from the description, or may be learned by practice of the disclosure.

## BRIEF DESCRIPTION OF THE DRAWINGS

These and/or other aspects will become apparent and more readily appreciated from the following description of embodiments, taken in conjunction with the accompanying drawings of which:

FIG. 1 illustrates a configuration of a spatiotemporally consistent disparity estimation system according to example embodiments;
FIG. 2 illustrates an example of a portion of a disparity map according to example embodiments;
FIG. 3 illustrates an example of a portion of a disparity map of temporally proximate frames according to example embodiments;
FIG. 4 illustrates a configuration of a temporally expanded graph according to example embodiments;
FIG. 5 illustrates a configuration of a disparity estimation system according to example embodiments; and
FIG. 6 illustrates a flowchart illustrating a disparity estimation method according to example embodiments.

## DETAILED DESCRIPTION

Reference will now be made in detail to embodiments, examples of which are illustrated in the accompanying drawings, wherein like reference numerals refer to the like elements throughout. Embodiments are described below to explain the present disclosure by referring to the figures.

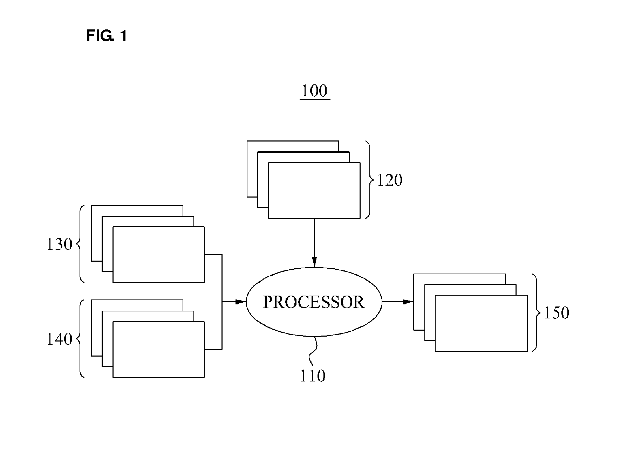

FIG. 1 illustrates a configuration of a spatiotemporally consistent disparity estimation system 100 according to example embodiments. FIG. 1 describes a processor 110 for estimating a spatiotemporally consistent disparity. Here, the processor 110 may receive an input of N images of a current frame 120, N images of a previous frame 130, and N disparity maps of the previous frame 140, and may output N disparity maps of the current frame 150. FIG.

1 illustrates three images and disparity maps with respect to each of the current frame and the previous frame, for example, an image or a disparity map with respect to a left viewpoint, an image or a disparity map with respect to a center viewpoint, and an image or a disparity map with respect to a right viewpoint. FIG. 1 illustrates a case where N corresponds to three. However, the case where N corresponds to three may merely be an example, and N according to an embodiment is not limited to three.

To acquire a consistent disparity using an image processing algorithm and the like, the consistent disparity may be quantitatively expressed. A spatial consistency and a temporal consistency are described below.
The spatial consistency may be obtained by causing neighboring pixels within a frame to have disparity values that are as similar as possible. A spatial smoothness may be enforced.

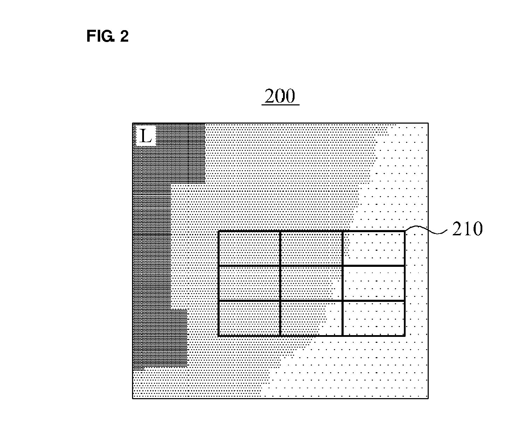

FIG. 2 illustrates an example of a portion of a disparity map according to example embodiments. Here, a picture 200 illustrates the portion of the disparity map, and a relatively large rectangle 210 is composed of nine relatively small rectangles, each of the nine relatively small rectangles correspond to a single pixel. The relatively large rectangle 210 includes eight relatively small rectangles surrounding a relatively small rectangle disposed in the center. Arrows may indicate pixels proximate to a pixel corresponding to the relatively small rectangle disposed in the center.
In this instance, while a top pixel, a left pixel, and a bottom pixel based on a center pixel may have continuity with respect to the center pixel, a right pixel may have discontinuity with respect to the center pixel. Thus, the discontinuity may be preserved in a case of enforcing the spatial smoothness.
When neighboring pixels in an image are more clearly defined, pixels having 1 as a Manhattan distance may be defined as pixels proximate to a corresponding pixel. In this case, each pixel may have four neighboring pixels. Here, when $f$ is assumed to be an assigned disparity, a spatial smoothness corresponding to a condition for causing neighboring pixels to have disparity values that are as similar as possible may be expressed by the following Equation 1.

Equation 1

$$E_{spatial}(f) = \sum_{\{p,q\} \in N} V_{\{p,q\}}(f(p), f(q))$$

In this instance, $N$ may correspond to a subset of a set $\{\{p,q\}|p,q \in P\}$. P may indicate a set with respect to all pixels of the entire viewpoints in the same frame. $V$ may indicate a more robustified $L_1$ distance, and may be expressed by Equation 2 shown below. An $L_1$ distance may indicate a case where $m$ is 1 in a Minkowski distance $L_m$, and may correspond to the above Manhattan distance.

Equation 2

$$V(l_1, l_2) = \min(|l_1 - l_2|, K)$$

Here, $l_1$ may indicate a disparity of a first pixel, and $l_2$ may indicate a disparity of a second pixel, respectively. $K$ may indicate a constant number that may be predetermined to be similar to an experimental value, and the discontinuity may be preserved using $K$.
A $L_2$ distance robustified by $V$ may be used as necessary. For example, the robustified $L_2$ distance may be obtained by calculating a maximum value between a distance value and a predetermined $K$ as the above Equation 2. When calculating the robustified $L_2$ distance, a weight of a calculated value may be constrained for a significantly large distance value, that is, for a distance value greater than or equal to a predetermined value.

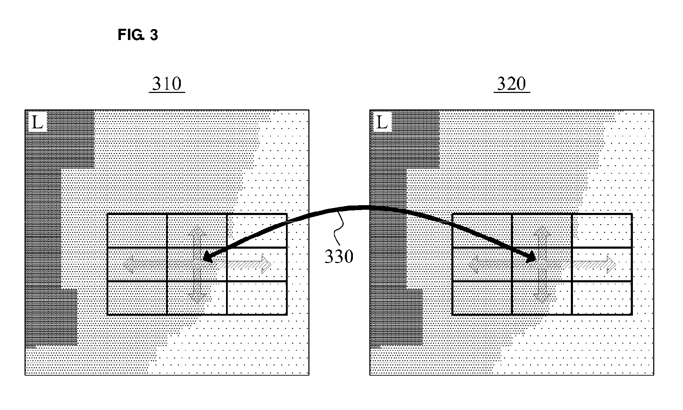

FIG. 3 illustrates an example of a portion of a disparity map of temporally proximate frames according to example embodiments. Referring to FIG. 3, a first picture 310 illustrates a portion of a disparity map with respect to a frame at time t-1, and a second picture 320 describes a portion of a disparity map with respect to a frame at time t. Note that an arrow 330 indicates pixels placed at the same position on the first picture 310 and the second picture 320.

According to an embodiment, considering proximate frames, a temporal smoothness may be enforced so that pixels places at the same position may have a disparity value that is as similar as possible. As described with reference to FIG. 3, the temporal smoothness may be performed between interframes instead of intraframes. The temporal smoothness may be defined as an interaction between the frame at time t-1 and the frame at time t at the same viewpoint. For example, the temporal smoothness may be defined between a left viewpoint of a fifth frame and a left viewpoint of a sixth frame.

Here, similar to the above FIG. 1, the temporal smoothness may be defined as the following Equation 3.

### Equation 3

$$E_{temporal}(f) = \sum_{\{p,q\} \in N} V_{\{p,q\}}(f(p), f(q))$$

Here, $N$ may correspond to a subset of a set $\{\{p,q\}|p \in P_p, q \in P_q\}$. $P_p$ may indicate a set of all pixels with respect to the frame at time t-1 at n viewpoint, and $P_p$ may indicate a set of all pixels with respect to the frame at time t at n viewpoint. $V$ may be expressed by the above Equation 2.

The consistency of the disparity has been quantitatively described. However, to simultaneously minimize energy of all terms in all pixels, a formularization may be conducted in a Markov Random Field form as the following Equation 4.

### Equation 4

$$E(x_1, ..., x_n) = \sum_{i \langle j} E^{i,j}(x_i, x_j)$$

Here, when each of $x_1, ..., x_n$ is assumed to be a disparity value, an interaction between two pixels may be expressed using $E^{i,j}$. When $x_i$ and $x_j$ interact as a result of a smoothness term, $V$, described with reference to the above Equation 3, may be used as a value of $E^{i,j}$.

To obtain a global minimum of the energy function, a belief propagation or graph cut process may be used. The energy function to be minimized may be defined as the following Equation 5.

### Equation 5

$$E(f) = E_{data}(f) + E_{spatial}(f) + E_{temporal}(f)$$

Here, $f$ may indicate an assigned disparity, that is, $x_1, ..., x_n$ shown in Equation 4. In $E_{data}$, a color consistency between viewpoints with respect to a predetermined disparity may be calculated, and the disparity may be determined in a state where a smoothness is not considered. A weight may be added to the temporal smoothness and a spatial smoothness depending on conditions. For example, by multiplying each of $E_{spatial}$ and $E_{temporal}$ by a constant term, a ratio may be adjusted.

Even though only a simple type of the temporal smoothness has been considered, the temporal smoothness may be modified to be various types. For example, the temporal smoothness may be considered only with respect to a region excluding a motion of an object occurring on an image between proximate frames on the image. To consider the modified temporal smoothness, the above Equation 5 may be expressed by the following Equation 6.

Equation 6

$$if \mid \vec{C}_{t-1}(f) - \vec{C}_t(f) \mid < Th,$$

$$then, E(f) = E_{data}(f) + E_{spatial}(f) + E_{temporal}(f)$$

Here, *Th* may indicate a predetermined threshold value, and C may indicate a value indicating a color. The above condition allows the temporal smoothness to be considered only for a case where a difference in values indicating colors at the same viewpoint of proximate frames is within a predetermined range. $E_{temporal}$ corresponding to a temporal smoothness term may not be included in the energy function for a case where the difference in values indicating colors exceeds the predetermined range. The arrow above C indicates that C corresponds to a vector instead of a scalar value. Equation 5 and Equation 6 may be diversely applied, for example, to a linear model, to a Potts model, and the like.

In the embodiments, by calculating the disparity map through the global minimization, terms of the above Equations may be collaboratively optimized. Various minimizing processes may be used. In a case of using a graph cut, an existing graph cut may be modified.

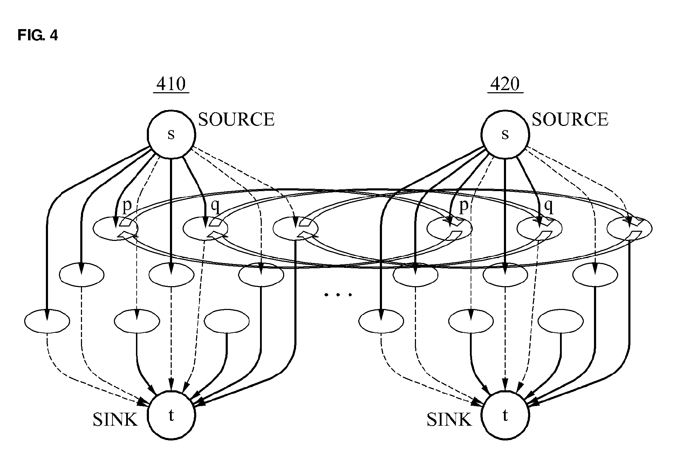

FIG. 4 illustrates a configuration of a temporally expanded graph according to example embodiments. A cut may indicate a partition of vertexes of a graph in a subset without two common elements. A cut-set of the cut may indicate a set of edges of end points present in different subsets of the above partition. When an edge is present in a cut-set of the edge, the edge may intersect with a cut. In a graph excluding a weight and a directivity, a size or a weight of the cut may indicate a number of edges intersecting with the cut. In a weighted graph, the size or the weight of the cut may be defined as a sum of weights of the edges intersecting with the cut.

Referring to FIG. 4, a left graph 410 corresponds to a graph at time t-1, and indicates nine pixels, a single source, and a single sink. A right graph 420 corresponds to a graph at time t, and indicates nine pixels, a single source, and a single sink. Here, for both the left graph 410 and the right graph 420, an edge may be connected between a plurality of pixels and the source, between the plurality of pixels and the sink, and between the plurality of pixels. A solid line arrow may indicate that nodes are connected by the edge on the graph, and a dotted line arrow may indicate that the nodes are omitted.

An existing graph cut may use a single graph such as the left graph 410 or the right graph 420. However, a graph temporally expanded for a temporal smoothness may connect an edge between pixels placed at corresponding positions on the left graph 410 and the right graph 420, and a global optimization may be collaboratively performed using the graph cut.

In a case of fixing a disparity map of a previous frame, a single graph may be configured instead of a graph connection connecting an edge between pixels, and a smoothness constraint may be added to an edge connected to the source or the sink. For example, energy may be expressed by a weight on an edge connected to the source or the sink. Here, a temporal interaction includes left-left interaction, center-center interaction, and right-right interaction. The temporal interaction may be expressed by the energy, and may be generated in a graph form.

A frame-by-frame operation has been described above. Hereinafter, a general process of using the operation for the entire video image will be described for a case of a three-viewpoint.

In response to an input of a first frame, an embodiment may perform a three-viewpoint disparity estimation considering only a spatial smoothness without considering a temporal smoothness. Thereafter, from a second frame, a disparity map without a flickering effect may be generated by fixing a disparity of a previous frame, and calculating only a disparity of a current frame, while considering the temporal smoothness. Since the disparity map may be generated using only the previous frame during a rendering, a disparity may be promptly calculated in response to an input of a new frame, enabling a prompt rendering.

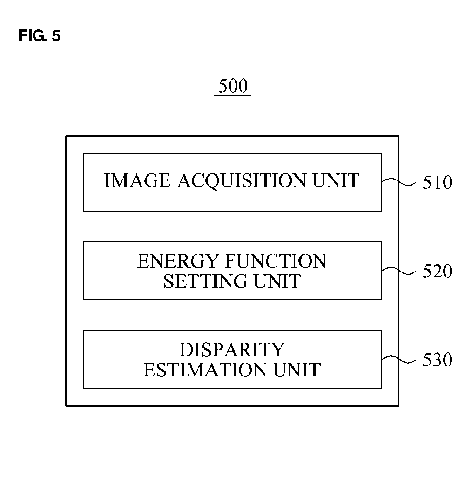

FIG. 5 illustrates a configuration of a disparity estimation system 500 according to example embodiments. Referring to FIG. 5, the disparity estimation system 500 according to example embodiments may include an image acquisition unit 510, an energy function setting unit 520, and a disparity estimation unit 530.

The image acquisition unit 510 may acquire N images of a previous frame, disparity maps with respect to each of the N images, and N images of a current frame. A plurality of images with respect to a plurality of viewpoints may be inputted for each frame. The image acquisition unit 510 may further acquire a plurality of images with respect to the previous frame, a plurality of disparity maps generated in the previous frame, and a plurality of images with respect to the current frame. The additional acquisition is for considering a temporal consistency in addition to a spatial consistency, and a temporally consistent disparity map may be generated through a temporal smoothness.

The energy function setting unit 520 may set an energy function. The energy function may be classified into a region including a motion of an object and a region excluding the motion of the object. Further, the energy may be set differently depending on the region. Here, the region excluding the motion of the object may include a region where a color difference between proximate frames is less than a predetermined threshold value. For example, as shown in the above Equation 6, the energy function setting unit 520 may set the energy function to include the temporal smoothness term with respect to a region where the color difference between proximate frames is less than the predetermined threshold value. The energy function setting unit 520 may set the energy function to exclude the temporal smoothness term with respect to a region where the color difference is greater than or equal to the predetermined threshold value. For example, in a case of a boundary region of an active object, a boundary may crack due to the temporal smoothness, and thus, the energy function setting unit 520 may set the energy function to exclude the temporal smoothness term with respect to the region including the motion of the object.

The energy function may be set differently between a first frame and a frame after the first frame. For example, the energy function setting unit 520 may set the energy function to exclude the temporal smoothness term with respect to the first frame. Additionally, the energy function setting unit 520 may set the energy function to include the temporal smoothness term with respect to the second frame and the subsequent frame, since the temporal smoothness term may be defined using both a current frame and a previous frame, and the previous frame of the first frame may not exist.

As described above, the energy function setting unit 520 may set the energy function to satisfy the above conditions.

The disparity estimation unit 530 may estimate a disparity through a process of optimizing energy with respect to a disparity assignment using the energy function. Further, the energy function may be set by the energy function setting unit 520. For example, the disparity estimation unit 530 may use the energy function including the temporal smoothness term with respect to a second or subsequent frame, and with respect to the region excluding the motion of the object in the image of the frame.

Here, the temporal smoothness term may constrain a difference in the disparity with respect to pixels present at the same location at the same point in time between proximate frames of the inputted images. The temporal smoothness term may be calculated using Equation 4 based on a sum of values where each of the values is a minimum value between an absolute value of the difference and a predetermined constant value, with respect to pixels present at the same location at the same point in time between proximate frames.

For example, as shown in Equation 5, the energy term may include a spatial smoothness term constraining a difference in the disparity with respect to neighboring pixels, a data term constraining a color difference between viewpoints, and the temporal smoothness term. Each term included in the energy function may be calculated with respect to the disparity assignment using the Markov random field as shown in Equation 4.

The disparity estimation unit 530 may use a graph cut to optimize the energy with respect to the disparity assignment. In this instance, the graph cut may be performed using a graph where an edge is connected between pixels placed at the same position among pixels of a graph with respect to the previous frame and pixels of a graph with respect to a current frame. In a case of fixing the disparity map of the previous frame, a single graph may be configured without connecting graphs of proximate frames, and the graph cut is performed by adding a constraint with respect to the temporal smoothness to an edge connected to a source or a sink on the graph.

As described above, with respect to the first frame, the disparity estimation unit 530 may estimate the disparity through a process of optimizing an energy with respect to the disparity assignment using an energy function including the data term and the spatial smoothness term. With respect to the second frame and the subsequent frame, the disparity estimation unit 530 may fix the disparity of the previous frame, and may estimate the disparity through a process of optimizing an energy with respect to the disparity assignment using an energy function including the data term, the spatial smoothness term, and the temporal smoothness term.

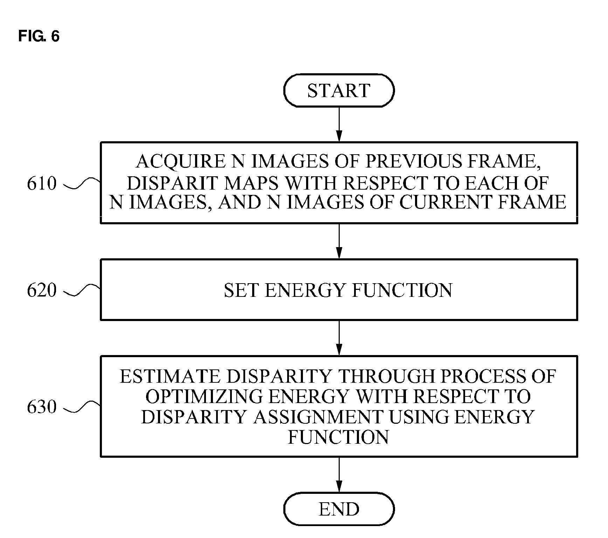

FIG. 6 illustrates a flowchart illustrating a disparity estimation method according to example embodiments. The disparity estimation method according to example embodiments may be performed with reference to the disparity estimation system 500 illustrated in FIG. 5. The disparity estimation method will be described with reference to FIG. 6 by describing a process where each operation is performed by the disparity estimation system 500.

In operation 610, the disparity estimation system 500 may acquire N images of a previous frame, disparity maps with respect to each of the N images, and N images of a current frame. A plurality of images with respect to a plurality of viewpoints may be inputted for each frame. The disparity estimation system 500 may further acquire a plurality of images with respect to the previous frame, a plurality of disparity maps generated in the previous frame, and a plurality of images with respect to the current frame. The additional acquisition is for considering a temporal consistency in addition to a spatial consistency, and a temporally consistent disparity map may be generated through a temporal smoothness.

In operation 620, the disparity estimation system 500 may set an energy function. The energy function may be classified into a region including a motion of an object and a region excluding the motion of the object. Further, the energy function may be set differently depending on the region. Here, the region excluding the motion of the object may include a region where a color difference between proximate frames is less than a predetermined threshold value. For example, as shown in the above Equation 6, the disparity estimation system 500 may set the energy function to include the temporal smoothness term with respect to a region where the color difference between proximate frames is less than the predetermined threshold value. The disparity estimation system 500 may set the energy function to exclude the temporal smoothness term with respect to a region where the color difference is greater than or equal to the predetermined threshold value. For example, in a case of a boundary region of an active object, a boundary may crack due to the temporal smoothness, and thus, the disparity estimation system 500 may set the energy function to exclude the temporal smoothness term with respect to the region including the motion of the object.

The energy function may be set differently for a first frame and a subsequent frame. For example, the disparity estimation system 500 may set the energy function to exclude the temporal smoothness term with respect to the first frame, and may set the energy function to include the temporal smoothness term with respect to the second frame and the subsequent frame, since the temporal smoothness term may be defined using both of a current frame and a previous frame, and the previous frame of the first frame may not exist.

As described above, the disparity estimation system 500 may set the energy function satisfying the above conditions.

In operation 630, the disparity estimation system 500 may estimate a disparity through a process of optimizing energy with respect to a disparity assignment using the energy function. In this instance, the disparity estimation system 500 may estimate the disparity through the process of optimizing energy with respect to the disparity assignment using the energy function set in operation 620. For example, the disparity estimation system 500 may use the energy function including the temporal smoothness term with respect to the frame after the first frame, and with respect to the region excluding the motion of the object in an image of a frame.

Here, the temporal smoothness term may constrain a difference in the disparity with respect to pixels present at the same location at the same point in time between proximate frames with respect to inputted images. The temporal smoothness term may be calculated as Equation 4 based on a sum of values where each of the values is a minimum value between an absolute value of the difference in the disparity and a predetermined constant value, with respect to pixels present at the same location at the same point in time between proximate frames.

For example, as shown in Equation 5, an energy term may include a spatial smoothness term constraining the difference in the disparity with respect to neighboring pixels, a data term constraining a color difference between viewpoints, and the temporal smoothness term. Each term included in the energy function may be calculated with respect to the disparity assignment using the Markov random field as shown in Equation 4.

The disparity estimation system 500 may use a graph cut to optimize the energy with respect to the disparity assignment. In this instance, the graph cut may be performed using a graph where an edge is connected between pixels placed at the same position among pixels of a graph with respect to the previous frame and pixels of a graph with respect to a current frame. In a case of fixing the disparity map of the previous frame, a single graph may be configured without connecting graphs of proximate frames, and the graph cut is performed by adding a constraint with respect to the temporal smoothness to an edge connected to a source or a sink on the single graph.

As described above, with respect to the first frame, the disparity estimation system 500 may estimate the disparity through a process of optimizing an energy with respect to the disparity assignment using an energy function including the data term and the spatial smoothness term. With respect to the second frame and the subsequent frame, the disparity estimation system 500 may fix the disparity of the previous frame, and may estimate the disparity through a process of optimizing an energy with respect to the disparity assignment using an energy function including the data term, the spatial smoothness term, and the temporal smoothness term.

Thus, according to an embodiment, by estimating a spatially and temporally consistent disparity, a flickering effect of a screen may be reduced. Since a disparity map may be generated using only a previous frame during a rendering, a disparity may be promptly calculated in response to an input of a new frame, enabling a prompt rendering.

The disparity estimation method according to the above-described embodiments may be recorded in non-transitory computer-readable media including program instructions to implement various operations embodied by a computer. The media may also include, alone or in combination with the program instructions, data files, data structures, and the like. Examples of non-transitory computer-readable media include magnetic media such as hard disks, floppy disks, and magnetic tape; optical media such as CD ROM disks and DVDs; magneto-optical media such as optical disks; and hardware devices that are specially configured to store and perform program instructions, such as read-only memory (ROM), random access memory (RAM), flash memory, and the like. Examples of the magnetic recording apparatus include a hard disk device (HDD), a flexible disk (FD), and a magnetic tape (MT). Examples of the optical disk include a DVD (Digital Versatile Disc), a DVD-RAM, a CD-ROM (Compact Disc - Read Only Memory), and a CD-R (Recordable)/RW. Examples of program instructions include both machine code, such as produced by a compiler, and files containing higher level code that may be executed by the computer using an interpreter. The described hardware devices may be configured to act as one or more software modules in order to perform the operations of the above-described embodiments, or vice versa.

Further, according to an aspect of the embodiments, any combinations of the described features, functions and/or operations can be provided.

Although embodiments have been shown and described, it would be appreciated by those skilled in the art that changes may be made in these embodiments without departing from the principles and spirit of the disclosure, the scope of which is defined by the claims and their equivalents.

## Claims

1. A disparity estimation system, comprising:

   a disparity estimation unit (530) adapted to estimate a disparity between frames through a process of optimizing an energy with respect to a disparity assignment using an energy function including a temporal smoothness term, wherein the temporal smoothness term constrains a difference in the disparity with respect to pixels present at the same location at the same point in time between proximate frames of the inputted images.

2. The system of claim 1, wherein the temporal smoothness term is calculated with respect to the pixels based on a sum of values where each of the values is a minimum value between an absolute value of the difference in the disparity of pixels and a predetermined constant value.

3. The system of any of the previous claims, wherein the energy function includes the temporal smoothness term with respect to a region where a motion of an object does not occur in the frames of the inputted image.

4. The system of claim 3, wherein the region where the motion of the object does not occur on the inputted image includes a region where a color difference between the proximate frames is less than a predetermined threshold value.

5. The system of any of the previous claims, wherein each term included in the energy function is calculated with respect to the disparity assignment using a Markov random field.

6. The system of claim 1, wherein the disparity estimation unit is adapted to estimate a disparity through a process of optimizing the energy comprises a process of optimizing the energy with respect to the disparity assignment using a graph cut.

7. The system of any of the previous claims, wherein the energy function further includes a spatial smoothness term constraining the difference in the disparity with respect to neighboring pixels, and a data term constraining a color different between viewpoints.

8. The system of any of the previous claims, further comprising:

   an image acquisition unit adapted to acquire a plurality of images of a previous frame, disparity maps with respect to each of the plural images, and a plurality of images of a current frame;
   an energy function setting unit adapted to set an energy function.

9. The system of claim 8, wherein the energy function setting unit is adapted to classify an energy function into a region including a motion of an object and a region excluding the motion of the object, wherein the region excluding the motion of the object may include a region where a color difference between proximate frames is less than a predetermined threshold value; and/or
   to set an energy function differently for a first frame and a subsequent frame.

10. A disparity estimation method, comprising:

    estimating a disparity between frames through a process of optimizing an energy with respect to a disparity assignment using an energy function including a temporal smoothness term (630), wherein the temporal smoothness term constrains a difference in the disparity with respect to pixels present at the same location at the same point in time between proximate frames with respect to inputted images.

11. The disparity estimation method of claim 10, wherein the temporal smoothness term is calculated with respect to the pixels based on a sum of values where each of the values is a minimum value between an absolute value of the difference and a predetermined constant value.

12. The disparity estimation method of claim 10 or 11, wherein the energy function includes the temporal smoothness term with respect to a region where a motion of an object does not occur in the inputted image.

13. The disparity estimation method of any of the claims 10-12, wherein the process of optimizing the energy comprises a process of optimizing the energy with respect to the disparity assignment using a graph cut,
wherein the graph cut is performed using a graph where an edge is connected between pixels placed at the same position among pixels of a graph with respect to a previous frame and pixels of a graph with respect to a current frame; and/or
by adding a constraint with respect to a temporal smoothness to an edge connected to a source or a sink on a graph.

14. The disparity estimation method of any of the claims 10-13, wherein the energy function further includes a spatial smoothness term constraining the difference in the disparity with respect to neighboring pixels, and a data term constraining a color difference between viewpoints, and the method further comprises:

estimating a disparity, with respect to a first frame, through a process of optimizing an energy involving the disparity assignment using an energy function including the data term and the spatial smoothness term, and fixing the disparity, with respect to a second frame and a subsequent frame, of the previous frame and estimates a disparity through a process of optimizing an energy with respect to the disparity assignment using an energy function including the data term, the spatial smoothness term, and the temporal smoothness term.

15. A non-transitory computer-readable medium comprising a program for instructing a computer to perform the method of any of the claims 10-14.

**FIG. 1**

**FIG. 2**

200

210

**FIG. 3**

**FIG. 4**

**FIG. 5**

500

| IMAGE ACQUISITION UNIT | — 510 |

| ENERGY FUNCTION SETTING UNIT | — 520 |

| DISPARITY ESTIMATION UNIT | — 530 |

**FIG. 6**

START

610 — ACQUIRE N IMAGES OF PREVIOUS FRAME, DISPARIT MAPS WITH RESPECT TO EACH OF N IMAGES, AND N IMAGES OF CURRENT FRAME

620 — SET ENERGY FUNCTION

630 — ESTIMATE DISPARITY THROUGH PROCESS OF OPTIMIZING ENERGY WITH RESPECT TO DISPARITY ASSIGNMENT USING ENERGY FUNCTION

END